(19) **Europäisches Patentamt**
**European Patent Office**
**Office européen des brevets**

(11) **EP 4 372 700 B1**

(12) **EUROPEAN PATENT SPECIFICATION**

(45) Date of publication and mention
of the grant of the patent:
**24.12.2025 Bulletin 2025/52**

(21) Application number: **22208272.9**

(22) Date of filing: **18.11.2022**

(51) International Patent Classification (IPC):
*G06V 20/59* (2022.01)     *G06V 40/10* (2022.01)
*G06V 40/16* (2022.01)     *G06V 10/24* (2022.01)
*G06V 10/62* (2022.01)

(52) Cooperative Patent Classification (CPC):
**G06V 20/59; G06V 10/24; G06V 10/62; G06V 40/16**

(54) **A SYSTEM AND METHOD FOR INTERIOR SENSING IN A VEHICLE**

SYSTEM UND VERFAHREN ZUR INNENRAUMERFASSUNG IN EINEM FAHRZEUG

SYSTÈME ET PROCÉDÉ DE DÉTECTION D'INTÉRIEUR DANS UN VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**22.05.2024 Bulletin 2024/21**

(73) Proprietor: **Aptiv Technologies AG
8200 Schaffhausen (CH)**

(72) Inventors:
• **Bohdan, Lukasz
DUBLIN (IE)**

• **Drab, Kamil
DUBLIN (IE)**

(74) Representative: **Lewis Silkin LLP
Arbor
255 Blackfriars Road
London SE1 9AX (GB)**

(56) References cited:
**WO-A1-2020/077194     US-A1- 2013 163 825
US-B1- 10 657 396**

## Description

## Introduction

The present disclosure relates to a system for interior sensing in a vehicle and associated method, e.g. of the type enabling accurate monitoring of an occupant by a camera within a moving vehicle.

## Background

Interior sensing devices have been introduced into vehicles, e.g. cameras for monitoring driver movements/characteristics for the purpose of safety. Particularly, such sensing capabilities are now implemented into the cabin of larger commercial vehicles such as trucks.

It has been recognised that common interior sensors such as DMS (driver monitoring system) cameras, which are widely used in modern passenger vehicles, are not suited for direct implementation in commercial vehicles for several reasons, e.g. related not only to environmental or vibration profile requirements, compelling suppliers to produce adequately more robust hardware, but also to signal processing demands. For example, the driver's seat of a commercial vehicle typically has its own suspension that introduces significant head movement relative to the interior camera, since the camera is usually fixed/mounted on top of a central display in the independently suspended cabin.

Accordingly, where interior monitoring has become a desirable safety feature for a large vehicle, there is now a requirement to provide a DMS camera which will address image instability caused by the above factors. Particularly, some functions that interior sensing devices are required to provide are based on human head movements, which can be easily distorted by the vibration based "noise" when the measuring device and measured object are not fixed to the same coordinate system. Examples of prior patent publications in the field include US2013/163825A1 and US10657396B1.

## Summary

In light of the above identified issues, the present invention seeks to address shortcomings associated with known interior sensing systems, e.g. as suitable for commercial vehicles, and propose an improved solution that may enhance aspects of a user/operator experience. The invention is set out in the appended set of claims.

A first broad aspect is outlined according to claim 1 of the appended claims. For example, the invention may be expressed as:

A system for interior sensing in a vehicle, e.g. serving as an instability mitigation system for a vehicle interior sensing device such as a camera, comprising: a sensing device for capturing image data relating to an occupant within a vehicle, the sensing device being subject to a first coordinate system of the vehicle; and at least one processor configured to perform the steps of: identifying feature points of the occupant from captured image data and generating raw feature points data; compensating the raw feature points data with displacement data correlated with a second coordinate system, and generating processed result data; and determining, based on the processed result data, one or more occupant characteristics indicative of the occupant's behaviour.

The camera is a driver monitoring camera that may be configured for capturing an image (e.g. as a channel) in the infrared spectrum. The camera may be a stereoscopic camera.

In one form, the displacement data is a signal input obtained from at least one sensor, such as an accelerometer. The accelerometer may be located with the sensing device/camera. Alternatively or in addition the accelerometer may be located with an extant device associated with the vehicle or occupant (e.g. a smart phone/device).

In one form, the displacement data is obtained from the captured image data or from captured image data collected from a second sensing device (e.g. camera). The sensing device or second sensing device may have a wide-angle lens to capture further details of cabin structure such as a seat (e.g. headrest). A datastream obtained from the captured image itself (or a second image) may monitor movement of the seat to calculate how it moves independently from or relative to other fixed points in a cabin.

In forms of the invention, the system is adapted for incorporation into a vehicle comprising a seat independently suspended (e.g. the second coordinate system) from the structure of the vehicle (e.g. the first coordinate system). In one form the seat (e.g. headrest) may comprise a seat feature point and/or sensor for deriving the displacement data.

In forms of the invention, the displacement data is time correlated with the captured image data.

In one form, the generated action includes one or more of: an alert (e.g. audible, visual and/or tactile) that an occupant has strayed outside predetermined safety parameters; modifying an augmented reality display/projection to correct for driver's perspective; activating a cabin illumination based on driver's line of sight.

In a second aspect, a method is outlined according to claim 11.

In a third aspect, a non-transitory computer readable medium is provided, comprising instructions which, when executed by a vehicle control system, implement the method disclosed herein.

In a particular form of the invention, there may be provided an instability mitigation system, comprising: a camera for positioning within the cabin of a vehicle having a driver's seat, e.g. with independent suspension, a displacement sensor (e.g. an accelerometer) associated with the camera, cabin, occupant and/or vehicle more generally; and a processor configured for: receiving image data from the sensing device, identifying feature points therewithin; and further receiving movement data from the sensor to perform a subtraction function to determine an accurate spatial location of the feature points corresponding to movement of a driver's head. The processor may be configured to compile a model from movement data sensed by the accelerometer and correlate this for subtraction from observed movement (image) data taken from identified feature points of a user. Results may be refined by a machine learning algorithm for greater accuracy over time.

In this way, the invention described herein reveals the possibility of making use of a common sensor, e.g. an accelerometer. An accelerometer is well known as an instrument that measures acceleration, the change in velocity of an object over time (SI unit: m.s$^{-2}$). Acceleration is directly proportional to the force acting on the object to move it (as is the mass of the object).

An accelerometer may already be installed in relation to other vehicle/navigation functions in combination with an interior sensing device (e.g. an inward facing camera), to mitigate inaccuracies in reading feature point movements within the sensing device's field-of-view (FOV) caused by road-based vibrations and/or non-uniformity. The accelerometer may be substituted or supplemented by an alternative means of collecting displacement/movement data, such as by another movement sensor configuration or image processing to track the movement of part of a vehicle seat.

By finding a correlation between the readings from the accelerometer or other data source (e.g. frequency and amplitude of acceleration) and the fluctuation of the feature points (e.g. frequency and amplitude) positions captured by, e.g. a DMS camera, the processing unit can be configured to filter-out (subtract) any unwanted offset signals caused by the vibrations and improve the quality in identifying/reading the driver's natural head movement which are used in calculations related to some functions of the vehicle safety system. Data from the accelerometer is used to more accurately interpret image data, e.g. to determine a state closer to actual driver behaviour than that apparently observed by the camera. Ultimately, the system is configured to generate actions such as alerts/warnings that may be visual, tactile or audible cues for a driver or other operator. The action may be to modify projection of an augmented reality, HUD, so that it is more accurate from a driver's perspective.

The accelerometer may be integrated with the camera assembly and/or the processing unit may utilize a signal generated by an accelerometer located in other vehicle devices/functional units. Signals throughout the vehicle may be communicated by a CAN interface or the like. As mentioned earlier, the signal relating to displacement may be supplemented or substituted by a datastream obtained from another source such as from the captured image itself where movement of the seat is monitored to calculate how it moves independently from other fixed points in a cabin.

It is noteworthy that the invention is not an image stabilization system as is known in the art; it is rather a workaround that helps to deal with observed problems that vibrations have on the accurate reading of feature points position during an interpretation step of the processor. Images from the internal camera are not ordinarily displayed for a driver and so the system does not need to serve to correct a displayed image.

It will be apparent that a system according to the invention has particular utility in land vehicles and analogous environments where an operator is subject to movement (e.g. independent movement, gyroscopic mechanisms) relative to the cabin and requires monitoring for safety, such as maritime and aerospace applications.

The invention was devised to address image processing inaccuracies, e.g. due to a bumpy road. As such it has application in the field of augmented reality functions for vehicle. For example, it is necessary for tracking of eyes to be accurate so that a projected image appears at a correct position from a driver's perspective, i.e. a frame that appears around a pedestrian needs to be accurately placed.

The invention may make use of different signal inputs, other than or in addition to an accelerometer. For example, DMS cameras have a narrow field of view but if a fish eye lens were utilised then it will be able to capture a greater area of the cabin and include the geometry of a seat as a whole. The headrest itself may be a reference point and its movement can be subtracted from the occupant reference points (e.g. eyes) to determine a more accurate behaviour of the occupant.

In the case above, the time correlated/comparative data is obtained from the image itself. In further forms, the headrest or other vehicle part moving with the occupant may be configured to be tracked by easily identifiable feature points (e.g. bright and/or reflective spots). Indeed, a seat may incorporate some other form of sensor for triangulation/spatial tracking relative to the cabin/DMS camera.

As will be apparent, the invention is concerned with recognising separate coordinate systems in order to interpret reference points, i.e. translating the relationships between two or more coordinate systems separating a driver from the road, e.g. an air suspended seat.

The invention is not image stabilisation in a conventional sense because, as it may never be seen by a person, the image itself is not corrected. Indeed, DMS cameras often operate in the infrared part of spectrum and there is no user VDU as such. There may be cases where images are reviewed by a human, e.g. following an incident, but the normal use of the system is to aid interpretation within a machine environment for implementing functions after the machine has interpreted user behaviour.

## Brief Description of Drawings

Illustrative embodiments will now be described with reference to the accompanying drawings in which:

Figure 1 pictorially illustrates how feature points of a person may fluctuate within the field of view of a sensing device;
Figure 2 graphically illustrates a filtering solution for z-axis readings, e.g. as recorded from the field of view of Figure 1;
Figure 3 illustrates a general block diagram describing the system layout; and
Figure 4 illustrates a machine learning library flow diagram.

## Detailed Description

The following description presents exemplary embodiments and, together with the drawings, serves to explain principles of the invention. However, the scope of the invention is not intended to be limited to the precise details of the embodiments or exact adherence with all features and/or system/method steps, since variations will be apparent to a skilled person and are deemed also to be covered by the description, provided that they fall within the scope of the appended set of claims. Terms for components used herein should be given a broad interpretation that also encompasses equivalent functions and features. In some cases, several alternative terms (synonyms) for structural/functional features have been provided but such terms are not intended to be exhaustive. Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "sideways", "upper" and "lower" may be used for convenience of explanation, usually with reference to the orientation shown in illustrations and are not intended to be ultimately limiting if an equivalent function can be achieved with an alternative dimension and/or direction. Indeed, in the present case a term such as "horizontal" axis or "vertical" axis (y, z) can be affected by the orientation imposed on the sensor mounting structure. Therefore, all directional terms are relative to each other.

The description herein refers to embodiments with particular combinations of steps or features, however, it is envisaged that further combinations and cross-combinations of compatible steps or features between embodiments will be possible. Indeed, isolated features may function independently as an invention from other features and not necessarily require implementation as a complete combination.

It will be understood that the illustrated embodiments show applications only for the purposes of explanation. In practice, the invention may be applied to many different configurations, where the embodiment is straightforward for those skilled in the art to implement.

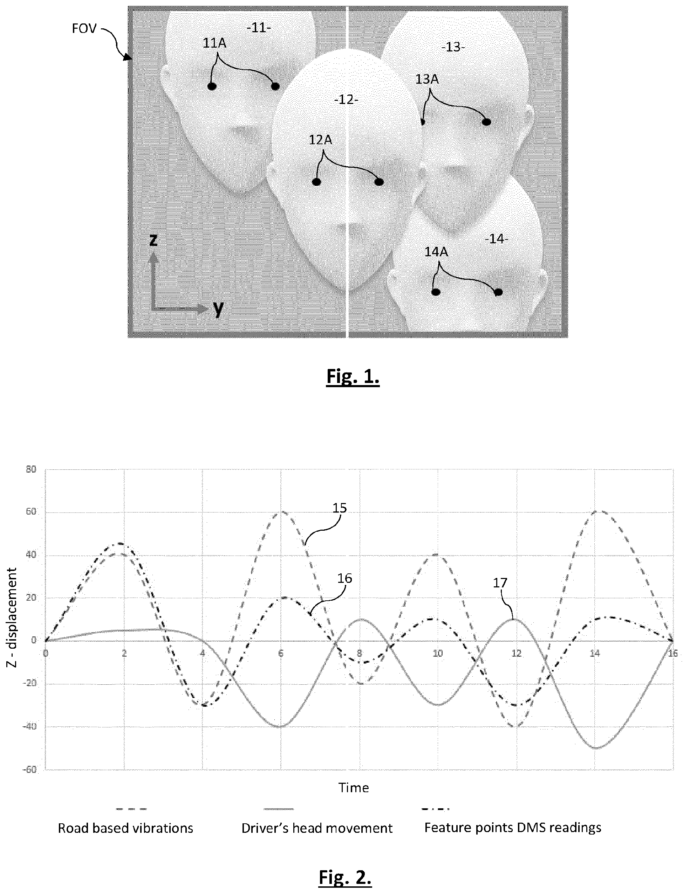

Referring to Figure 1, a series of head images 11, 12, 13, 14 (where pairs of eyes 11A, 12A, 13A, 14A, serve as feature points) represent movement of a single human head within a field of view (FOV) frame recorded by a camera. Movement of the head between positions 11-14 may be caused by the effect described in the background and summary sections above, e.g. independent suspension of a driver seat relative to a camera fixed with the cabin or other structure. It is clear that feature points 11A-14A also fluctuate within the FOV, displaced along Z and y axes as indicated.

In accordance with the invention, it has been recognised that the degree of movement, due to road vibration and non-uniformity, of the head shown in Figure 1 is more severe than a natural degree of movement that would be observed if there were no road vibration, etc. Therefore, the recorded movement with features 11A-14A as reference points must be filtered for an interpretation that more closely resembles a natural/actual degree of movement. Movement due to natural inclination of the driver can then be interpreted to determine whether any safety or other functional issues can be identified.

Since driver seat suspension/shock absorption is typically in the vertical, up-down, z- direction, the example outlined herein relates to removal of z-axis "noise".

Figure 2 graphically depicts a filtering explanation for z-axis readings recorded by a processor in communication with a camera that is capturing a FOV in real time. Particularly, it is evident that feature point reading disturbances can appear when the camera and driver's seat are not fixed to the same coordinate system. The dashed oscillating curve (---) 15, that has the highest z-displacement over time shown in Figure 2, represents approximated variations of the offset between the respective camera and the seat coordinate systems (i.e. independent movements) calculated using a vibration profile in the z-direction, read by an accelerometer and caused, for example, by road unevenness. In other words, curve 15 is an accelerometer reading.

The relationship between the z-displacement and acceleration can be specified experimentally during a development phase of the vehicle systems, depending on the accelerometer location.

The "dash-dot" line (-.-.-) 16, having a second highest z-displacement over time shown in Figure 2, shows the camera FOV actual readings of the feature point, as it moves over time (e.g. 11A-14A), position in z-axis which fluctuation is influenced by the seat suspension and road-based vibrations. Feature points in a moving image are identified according to known image processing techniques.

With time-correlated displacement data collected by both the accelerometer and feature points in the FOV observations, the solid line (-) 17 of Figure 2 graphically illustrates a closer representation of driver's head movement due to natural events, e.g. where a head gradually moves downwardly when the driver is drowsy. Derivation of this signal and its quality/reliability is crucial for further functional calculations and safety determinations.

The concept of refining the signal can be generally described by the equation:

$$z_h = z_c - z_a$$

where:

$z_c$ is the displacement position in the z-axis related to the camera readings (dash-dot line);
$z_a$ is the approximated offset based on acceleration calculations (dashed line);
$z_h$ is the calculated displacement position in z-axis related to natural head movements (solid line).

The foregoing simplified example relates to monitoring the z direction, but full three-dimensional space (x, y, z) directions are preferably to be implemented by the system for the most accurate interpretation of user feature points.

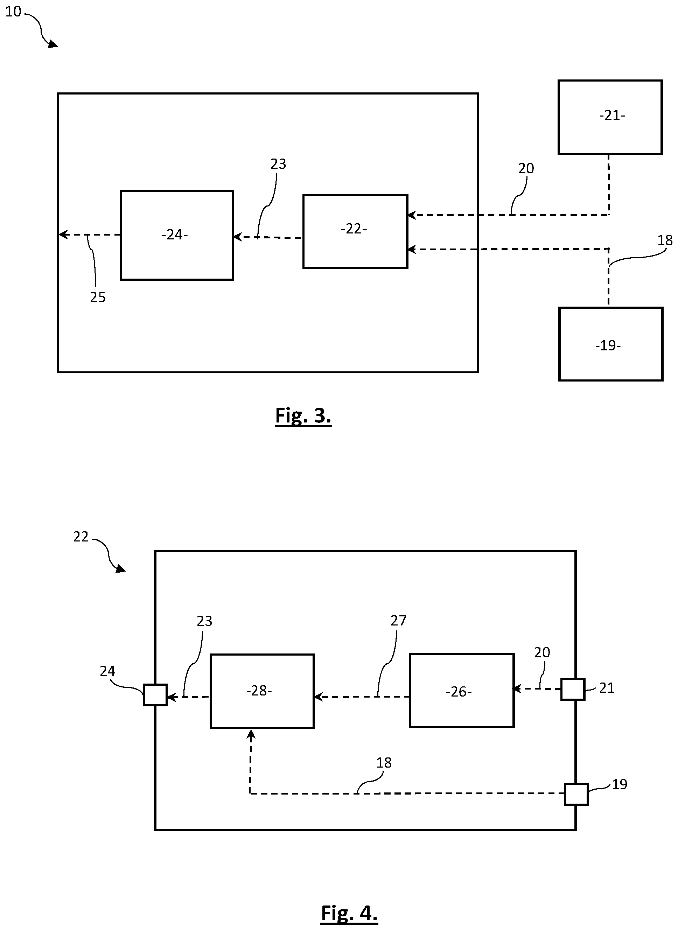

Block diagrams presented in Figures 3 and 4 describe schematically how a signal 18, e.g. from an accelerometer 19 can be used to improve DMS feature points position readings in order to provide robust computing outcomes with high confidence level.

Figure 3 illustrates an outline of instability mitigation system 10 according to the invention, i.e. based on inputs of video data 20 from a camera module 21 and input data 18, e.g. acceleration data from the accelerometer 19. Particularly, the inputs 18, 20 feed into a machine learning library 22 configured to provide robust processing of time correlated data in accordance with known programming techniques. A processed result signal 23 (analogous to curve 17 of Figure 2) is sent to a driver monitoring system (DMS) application 24 for interpretation and a final output signal 25 may activate an alert, motivating action by a driver or other operator.

Figure 4 shows the machine learning library function 22 in greater detail, e.g. a processing unit where second coordinate data 18 can be utilized. Based on the raw video data 20, a feature point detection module 26 is configured to calculate feature points positions and generate a processed signal 27, which is expected to be impacted by unintended driver head movement caused by the road/cabin/driver seat vibrations. This unwanted offset can be compensated in a system function module 28 configured to utilise the vibration-based displacement signal 27 correlated with vibration data from the accelerometer (signal 18).

As mentioned above, the vibration corrected signal 23 is output to a DMS 24 for prompting an action.

It will be apparent to a skilled person that the invention takes a data input related to a coordinate system and injects it into the processing system, downstream of feature point detection image processing, to then reach more accurate conclusions when interpreting driver behaviour.

One example of data input is use of an accelerometer or other sensor that may be resident in a driver's own phone. Sensors do not have to be fixed on the vehicle so long as they are in or around the moving vehicle.

Alternative forms of data input may include derivations of a second coordinate system from the image itself, e.g. tracking a structure, such as a seat, that is subject to the same origin of movement as the feature points.

The invention has implications not only for safety but in general for comfort/improved driver experience and entertainment. Implementation of action includes not only alarm but helpful actions to improve comfort and user experience, such as detecting that a driver is glancing over at a passenger area (e.g. glovebox) in a dimmed cabin and automatically raising the level of illumination in that area.

It is noteworthy that, in general, 2D cameras may be utilised with the invention, e.g. in IR spectrum, and the wider cameras also mentioned herein are usually RGB/IR cameras (i.e. operating in both the IR spectrum, as well as in the visual range, such as for entertainment purposes).

There are also cameras, including 3D/stereoscopic cameras, that can be utilised with the concepts herein. For example, a TOF (time of flight) camera. Such devices have been used to track drivers' gestures in vehicles, and also to precisely track the 3D eyes position, e.g. for compensating augmented reality parallax as mentioned herein. A TOF camera utilizes light to bounce off an observed object and measures the time between the light emission and reception (i.e. its travel to the object and reflecting back to the sensor).

By way of summary, the invention is generally embodied by an instability mitigation system for a vehicle interior sensing device. A camera captures image data relating to an occupant within a vehicle, whereafter feature points of the occupant are identified from the captured image data. The raw feature points data is then compensated by displacement data correlated with a second coordinate system. Resultant data, where the feature points are more accurately represented (e.g. road vibration and its effect upon an independently suspended driver's seat is cancelled out), is interpreted according to occupant behaviour and an action is generated. The action may be an alert or modification of an augmented reality projection visible to a driver.

**Claims**

1. A system (10) for interior sensing in a vehicle, comprising:

   a camera (21) for capturing image data (20) relating to an occupant (11, 12, 13, 14) within a vehicle, the camera being subject to a first coordinate system of the vehicle; and
   at least one processor (22, 24) configured to perform the steps of:

   identifying feature points (26) of the occupant from captured image data and generating raw feature points data (27);
   compensating (28) the raw feature points data with displacement data correlated with a second coordinate system, and generating processed result data (23); and
   determining, based on the processed result data (23), one or more occupant characteristics indicative of the occupant's behaviour;
   wherein the second coordinate system is associated with a part of the vehicle moving with an occupant and independently movable relative to the vehicle structure; and
   wherein the displacement data is obtained from a sensor and/or processing of image data to track the movement of the part of the vehicle moving with the occupant.

2. The system of claim 1, wherein the displacement data comprises data obtained from at least one sensor (19) of the system.

3. The system of claim 2, wherein the at least one sensor (19) is located in proximity to the occupant.

4. The system of claim 1, wherein the displacement data is obtained from the captured image data or from second captured image data collected from a second camera.

5. The system of claim 4, wherein the camera or second camera has a wide-angle to monitor cabin structure, including a seat.

6. The system of claim 5, wherein the displacement data is obtained from monitoring movement of the seat.

7. The system of any preceding claim, wherein the displacement data is time correlated with the captured image data (20).

8. The system of any preceding claim, wherein an action (25) is generated dependent on the one or more determined occupant characteristics, optionally including one or more of: an audible, visual and/or tactile alert associated with an occupant straying outside predetermined safety parameters; modifying an augmented reality display/projection to correct for driver's perspective; activating a cabin illumination based on driver's line of sight.

9. A vehicle comprising the system according to any one of the preceding claims, and a seat which is the part of the vehicle associated with the second coordinate system and independently suspended from the structure of the vehicle.

10. The vehicle of claim 9, wherein the seat comprises a set of seat feature points for tracking by the processing of image data and/or the sensor for deriving the displacement data.

11. A method for sensing the interior of a vehicle, including the steps of:

   capturing, by a camera subject to a first coordinate system of the vehicle, image data relating to an occupant within the vehicle;
   identifying feature points of the occupant from the captured image data and generating raw feature points data;
   compensating the raw feature points data with displacement data correlated with a second coordinate system, and generating processed result data;
   determining, based on the processed result data, one or more occupant characteristics indicative of the occupant's behaviour;
   wherein the second coordinate system is associated with a part of the vehicle independently movable with the occupant relative to a structure of the vehicle; and
   wherein the displacement data is obtained from a sensor or processing of image data to track movement of the part of the vehicle moving with the occupant.

12. The method of claim 11, wherein the part of the vehicle independently movable with the occupant is a seat independently suspended from the structure of the vehicle.

13. The method of claim 11 or 12, wherein an action is generated dependent on the one or more determined occupant characteristics.

14. A non-transitory computer readable medium comprising instructions which, when executed by a vehicle control system, implement the method of any one of claims 11 to 13.

**Patentansprüche**

1. System (10) zur Innenraumsensierung in einem Fahrzeug, umfassend:

   Kamera (21) für das Erfassen von Bilddaten (20) bezogen auf einen Insassen (11, 12, 13, 14) in einem Fahrzeug, wobei die Kamera einem ersten Koordinatensystem des Fahrzeugs zugeordnet ist; und
   mindestens einen Prozessor (22, 24), der konfiguriert ist, die folgenden Schritte auszuführen:

   Ermitteln von Merkmalspunkten (26) des Insassen aus erfassten Bilddaten und Erzeugen von Rohdaten zu Merkmalspunkten (27) ;
   Kompensieren (28) der Rohdaten der Merkmalspunkte mit Verschiebungsdaten, die einem zweiten Koordinatensystem zugeordnet sind, und Erzeugen von verarbeiteten Ergebnisdaten (23); und
   Bestimmen, basierend auf den verarbeiteten Ergebnisdaten (23), einer oder mehrerer Insasseneigenschaften, die bezeichnend für ein Verhalten des Insassen sind;
   wobei das zweite Koordinatensystem mit einem Teil des Fahrzeugs verbunden ist, das sich mit einem Insassen bewegt und im Verhältnis zu der Fahrzeugstruktur unabhängig beweglich ist; und
   wobei die Verschiebungsdaten über einen Sensor und/oder das Verarbeiten von Bilddaten erlangt werden, um die Bewegung des Teils des Fahrzeugs nachzuverfolgen, das sich mit dem Insassen bewegt.

2. System nach Anspruch 1, wobei die Verschiebungsdaten Daten umfassen, die von mindestens einem Sensor (19) des Systems erfasst wurden.

3. System nach Anspruch 2, wobei der mindestens eine Sensor (19) in der Nähe des Insassen positioniert ist.

4. System nach Anspruch 1, wobei die Verschiebungsdaten von den erfassten Bilddaten oder von zweiten erfassten Bilddaten, die von einer zweiten Kamera erfasst wurden, stammen.

5. System nach Anspruch 4, wobei die Kamera oder die zweite Kamera einen Weitwinkel aufweisen, um eine Kabinenstruktur, einschließlich einen Sitz, zu überwachen.

6. System nach Anspruch 5, wobei die Verschiebungsdaten von einer Überwachungsbewegung des Sitzes stammen.

7. System nach einem der vorstehenden Ansprüche, wobei die Verschiebungsdaten den erfassten Bilddaten (20) zeitlich zugeordnet sind.

8. System nach einem der vorstehenden Ansprüche, wobei eine Aktion (25) abhängig von der einen oder den mehreren bestimmten Insasseneigenschaften erzeugt wird, optional einschließlich einer oder mehrerer aus: Einer akustischen, visuellen und/oder taktilen Warnung, die mit einem Insassen verbunden ist, der von vorbestimmten Sicherheitsparametern abweicht; Modifizieren einer Augmented-Reality-Anzeige/Projektion, um die Perspektive des Fahrers zu korrigieren; Aktivieren einer Kabinenbeleuchtung basierend auf der Sichtlinie des Fahrers.

9. Fahrzeug, umfassend das System nach einem der vorstehenden Ansprüche und einen Sitz, der der Teil des Fahrzeugs ist, der mit dem zweiten Koordinatensystem verbunden und unabhängig von der Struktur des Fahrzeugs eingesetzt ist.

10. Fahrzeug nach Anspruch 9, wobei der Sitz einen Satz von Sitz-Merkmalspunkten umfasst, die durch das Verarbeiten von Bilddaten und/oder durch den Sensor zur Ableitung der Verschiebungsdaten nachverfolgt werden.

11. Verfahren zur Innenraumsensierung eines Fahrzeugs, einschließlich der folgenden Schritte:

    Erfassen über eine Kamera, die einem ersten Koordinatensystem des Fahrzeugs zugeordnet ist, von Bilddaten zu einem Insassen des Fahrzeugs;
    Ermitteln von Merkmalspunkten des Insassen aus den erfassten Bilddaten und Erzeugen von Rohdaten zu Merkmalspunkten;
    Kompensieren der Rohdaten der Merkmalspunkte mit Verschiebungsdaten, die einem zweiten Koordinatensystem zugeordnet sind, und Erzeugen von verarbeiteten Ergebnisdaten;
    Bestimmen, basierend auf den verarbeiteten Ergebnisdaten, einer oder mehrerer Insasseneigenschaften, die bezeichnend für ein Verhalten des Insassen sind;
    wobei das zweite Koordinatensystem mit einem Teil des Fahrzeugs verbunden ist, der mit dem Insassen und im Verhältnis zu der Fahrzeugstruktur unabhängig beweglich ist; und
    wobei die Verschiebungsdaten über einen Sensor oder das Verarbeiten von Bilddaten erlangt werden, um eine Bewegung des Teils des Fahrzeugs nachzuverfolgen, das sich mit dem Insassen bewegt.

12. Verfahren nach Anspruch 11, wobei der Teil des Fahrzeugs, der unabhängig mit dem Insassen beweglich ist, ein Sitz ist, der unabhängig von der Struktur des Fahrzeugs eingesetzt ist.

13. Verfahren nach Anspruch 11 oder 12, wobei eine Aktion erzeugt wird, die von der einen oder den mehreren Insasseneigenschaften abhängt.

14. Ein nichtflüchtiges computerlesbares Medium, das Anweisungen umfasst, die, wenn sie von einem Fahrzeugsteuerungssystem ausgeführt werden, das Verfahren nach einem der Ansprüche 11 bis 13 implementieren.

## Revendications

1. Système (10) destiné à la détection intérieure dans un véhicule comprenant :

   une caméra (21) destinée à capturer des données d'image (20) relatives à un occupant (11, 12, 13, 14) à l'intérieur d'un véhicule, la caméra étant soumise à un premier système de coordonnées du véhicule ; et
   au moins un processeur (22, 24) configuré pour effectuer les étapes suivantes :

   l'identification des points spécifiques (26) de l'occupant à partir de données d'image capturées et la génération des données brutes de points spécifiques (27) ;
   la compensation (28) des données brutes de points spécifiques avec des données de déplacement corrélées avec un second système de coordonnées, et la génération des données de résultat traitées (23) ; et
   la détermination, en fonction des données de résultat traitées (23), d'une ou plusieurs caractéristiques d'occupant qui indiquent le comportement de l'occupant ;
   dans lequel le second système de coordonnées est associé à une partie du véhicule se déplaçant avec un occupant et mobile de manière indépendante par rapport à la structure du véhicule ; et
   dans lequel les données de déplacement sont obtenues à partir d'un capteur et/ou d'un traitement de données d'image pour suivre le mouvement de la partie du véhicule se déplaçant avec l'occupant.

2. Système selon la revendication 1, dans lequel les données de déplacement comprennent des données obtenues à partir d'au moins un capteur (19) du système.

3. Système selon la revendication 2, dans lequel ledit au moins un capteur (19) est situé à proximité de l'occupant.

4. Système selon la revendication 1, dans lequel les données de déplacement sont obtenues à partir des données d'image capturées ou à partir de secondes données d'image capturées collectées à partir d'une seconde caméra.

5. Système selon la revendication 4, dans lequel la caméra ou la seconde caméra présentent un grand angle pour surveiller la structure de cabine, comportant un siège.

6. Système selon la revendication 5, dans lequel les données de déplacement sont obtenues à partir de la surveillance du mouvement du siège.

7. Système selon une quelconque revendication précédente, dans lequel les données de déplacement sont corrélées dans le temps avec les données d'image capturées (20).

8. Système selon une quelconque revendication précédente, dans lequel une action (25) est générée dépendante de la ou des caractéristiques déterminées de l'occupant, comportant éventuellement une ou plusieurs des éléments suivants : une alerte sonore, visuelle et/ou tactile associée à un occupant s'écartant de paramètres de sécurité prédéfinis ; la modification d'un affichage/projection de réalité augmentée pour corriger la perspective du conducteur ; l'activation d'un éclairage de cabine basé sur la ligne de vue du conducteur.

9. Véhicule comprenant le système selon l'une quelconque des revendications précédentes, et un siège qui est la partie du véhicule associée au second système de coordonnées et suspendu de manière indépendante de la structure du véhicule.

10. Véhicule selon la revendication 9, dans lequel le siège comprend un ensemble de points spécifiques de siège destinés au suivi par le traitement de données d'image et/ou le capteur servant à dériver les données de déplacement.

11. Procédé destiné à la détection intérieure dans un véhicule comprenant :

   la capture, par une caméra soumise à un premier système de coordonnées du véhicule, de données d'image relatives à un occupant à l'intérieur du véhicule ;
   l'identification des points spécifiques de l'occupant à partir des données d'image capturées et la génération des données brutes de points spécifiques ;

la compensation des données brutes de points spécifiques avec des données de déplacement corrélées avec un second système de coordonnées, et la génération des données de résultat traitées ; et

la détermination, en fonction des données de résultat traitées, d'une ou plusieurs caractéristiques d'occupant qui indiquent le comportement de l'occupant ;

dans lequel le second système de coordonnées est associé à une partie du véhicule mobile de manière indépendante avec un occupant par rapport à la structure du véhicule ; et

dans lequel les données de déplacement sont obtenues à partir d'un capteur ou d'un traitement de données d'image pour suivre le mouvement de la partie du véhicule se déplaçant avec l'occupant.

12. Procédé selon la revendication 11, dans lequel la partie du véhicule mobile de manière indépendante avec l'occupant est un siège suspendu de manière indépendante de la structure du véhicule.

13. Procédé selon la revendication 11 ou 12, dans lequel une action est générée en fonction de la ou des caractéristiques déterminées de l'occupant.

14. Support lisible par non transitoire ordinateur comprenant des instructions qui. lorsqu'elles sont exécutées par un système de commande du véhicule implémentent le procédé selon l'une quelconque des revendications 11 à 13.

**Fig. 1.**

Road based vibrations    Driver's head movement    Feature points DMS readings

**Fig. 2.**

**Fig. 3.**

**Fig. 4.**

**EP 4 372 700 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013163825 A1

- US 10657396 B1